# EUROPEAN PATENT APPLICATION

(11) **EP 3 613 680 A1**
(43) Date of publication of application: **26.02.2020**
(21) Application number: 19193182.3
(22) Date of filing: 22.08.2019
(51) Int. Cl.: B65G 1/04, F16B 7/04

(54) **AUTOMATED STORAGE AND RETRIEVAL SYSTEM**

(30) Priority: 22.08.2018 GB 201813691
(71) Applicant: Moffett Automated Storage Limited, Monaghan (IE)
(72) Inventor: MOFFETT, Sam, County Monaghan (IE)
(74) Representative: Schütte, Gearoid

(57) **Abstract**

An automated storage and retrieval system (1) comprises a three-dimensional lattice framework (2) defining a plurality of storage bays (3). The framework (2) is formed by bolting together a plurality of frame members to form vertical stanchions (5) interconnected by horizontal beams (6). A rail network (7) extends through the framework (2). A robotic load handler (8) is movable through the rail network (7) to deliver a load pallet (9) to each storage bay (3) and retrieve said load pallet (9) from the storage bay (3). The rail network (7) comprises an aisle (10) extending from a front to a rear of the framework (2) with a plurality of spaced-apart rows (11) extending outwardly from each side of the aisle (10) into the lattice framework (2) alongside a row of storage bays (3) in the framework (2). The rail network (7) includes rails (15) for the robotic load handler (8) extending along each row (11). Each rail (15) is slidably engagable with associated mounting brackets (16) on the framework (2) to mount the rails (15) on the framework (2) seated on spaced-apart support beams (6) of the framework (2).

## Description

### Introduction

This invention relates to an automated storage and retrieval system for the storage and retrieval of goods in a warehouse or distribution centre.

The invention particularly relates to an automated storage and retrieval system of the type including a three-dimensional lattice framework defining a plurality of storage bays, the framework comprising a plurality of frame members secured together to form vertical stanchions interconnected by horizontal beams, a rail network extending through the framework, a robotic load handler which is movable through the rail network to deliver a load pallet to each storage bay and retrieve said load pallet from the storage bay, the rail network extending along an aisle extending from a front to a rear of the framework with a plurality of spaced-apart rows extending outwardly from at least one side of the aisle into the lattice framework alongside a row of storage bays in the framework.

Examples of automated storage and retrieval systems are to be found in WO2016/094039 A1, CA 2937669 A1 and US 2014/086714 A1.

It is an object of the present invention to provide an improved automated storage and retrieval system of this type.

### Summary of the Invention

According to the invention, there is provided an automated storage and retrieval system of the type including a three-dimensional lattice framework defining a plurality of storage bays, the framework comprising a plurality of frame members secured together to form vertical stanchions interconnected by horizontal beams, a rail network extending through the framework, a robotic load handler which is movable through the rail network to deliver a load pallet to each storage bay and retrieve said load pallet from the storage bay, the rail network extending along an aisle extending from a front to a rear of the framework with a plurality of spaced-apart rows extending outwardly from at least one side of the aisle into the lattice framework alongside a row of storage bays in the framework, characterised in that the rail network includes rails for the robotic load handler extending along each row, said rails slidably engagable with associated mounting brackets on the framework to mount the rails on the framework seating on spaced-apart support beams of the framework.

Advantageously no fasteners are required to secure the rails on the framework and thus the rails can be readily easily and quickly assembled on the framework to form the rail network on the framework.

In one embodiment of the invention, each rail mounting bracket comprises a vertical plate mounted on the support frame, the plate being attached to the support frame and having an upwardly open groove at a top edge of the plate engaged by the rail for hanging the rail on the plate.

In another embodiment, stop means is provided to prevent longitudinal movement of each rail mounted on the framework.

In another embodiment, the stop means comprises locking tabs projecting downwardly from each rail for engagement with the support beams. The tabs may be arranged to engage the same beams or different beams.

In another embodiment, at least one pair of locking tabs is provided on each rail for engagement with opposite sides of one or more support beams. The locking tabs may be arranged to engage the same or different beams.

In another embodiment, each locking tab is pressed out of the rail.

In another embodiment, each rail has a channel for reception of wheels of the robotic load handler.

In another embodiment, each rail has a Z-profile, having a bottom flange forming a rail track, an intermediate web extending upwardly from a side of the bottom flange and a top flange projecting outwardly at a top of the web on an opposite side of the web to the bottom flange.

In another embodiment, a downturned edge at an outer edge of the top flange engages within the groove of the vertical plate of the rail mounting bracket to hang the rail on the rail mounting bracket, with an outer face of the intermediate web abutting a free vertical edge of the plate.

In another embodiment, the plate has a bevelled edge extending between the top edge of the plate at the groove and an outer free edge of the plate.

In another embodiment, a pair of spaced-apart longitudinal beams defining the aisle have upper faces forming a track for the robotic load handler, pairs of cross beams being mounted between the longitudinal beams, perpendicular thereto, and aligned with associated pairs of rails in each row.

In another embodiment, each cross beam has a mounting flange at each end which slidably engages within an upwardly open receiver socket on an inside face of each longitudinal beam for mounting the cross beam between the longitudinal beams with a top face of the cross beam lying in the same plane as the upper faces of the longitudinal beams.

In another embodiment, each cross beam comprises an upright plate with a horizontal top flange at a top of the upright plate forming a track for wheels of the robotic load handler, the upright plate projecting outwardly at each end of the top flange and tapering outwardly and downwardly therefrom to leave a slot between an outer end of each cross beam and the longitudinal beam with which it is engaged at a top of the cross beam.

In another embodiment, the mounting flange at each end of the cross beam is perpendicular to the upright plate and perpendicular to the top flange, and the receiver socket is formed by two overlapping U-shaped plates, namely an outer plate and an inner plate, the outer plate mounted on the inside face of the longitudinal beam and comprising a pair of spaced-apart upright side arms interconnected at their lower ends by a cross member, the inner plate mounted on an inner face of the outer plate and having upright arms which overlap and project inwardly of the side arms of the outer plate and a cross member interconnecting lower ends of the upright arms and overlapping and projecting upwardly of the cross member of the outer plate to define therewith a socket for reception of the mounting flange of the cross beam.

In another embodiment, the robotic load handler is battery operated and has a charging connector on an underside of the robotic load handler for engagement with a complementary charging connector at a charging station located between rails within the framework.

### Brief Description of the Drawings

The invention will be more clearly understood by the following description of some embodiments thereof, given by way of example only, with reference to the accompanying drawings, in which:
Fig. 1 is a perspective view of an automated storage and retrieval system according to the invention;
Fig. 2 is a detail exploded perspective view of portion of a rail network of the system of the invention;
Fig. 3 is an elevational view of the rail portion shown in Fig. 2;
Fig. 4 is a perspective view of another portion of the rail network;
Fig. 5 is a detail view showing portion of the rail network;
Fig. 6 is an exploded perspective of portion of a framework of the system of the invention;
Fig. 7 is a perspective view of the framework portion shown in Fig. 6;
Fig. 8 is a detail perspective of a cross beam forming portion of the framework;
Fig. 9 is an elevational view of the cross bream;
Fig. 10 is an end elevational view of the cross beam;
Fig. 11 is a detail perspective view of a receiver socket for the cross beam;
Fig. 12 is an elevational view of portion of the framework with a robotic load handler mounted thereon;
Fig. 13 is an enlarged detail view showing portion of the assembly in Fig. 12;
Fig. 14 is another enlarged detail elevational view of portion of the assembly shown in Fig. 12; and
Fig. 15 is a detail perspective view of portion of the robotic load handler.

### Detailed Description of the Preferred Embodiments

Referring to the drawings, there is illustrated an automated storage and retrieval system according to the invention indicated generally by the reference numeral 1. The system 1 comprises a three-dimensional lattice framework 2 defining a plurality of storage bays 3. The framework 2 is formed by bolting together a plurality of frame members to form vertical stanchions 5 interconnected by horizontal beams 6. A rail network 7 extends through the framework 2. A robotic load handler 8 is movable through the rail network 7 to deliver a load pallet 9 to each storage bay 3 and retrieve said load pallet 9 from the storage bay 3. The rail network 7 comprises an aisle 10 extending from a front to a rear of the framework 2 with a plurality of spaced-apart rows 11 extending perpendicularly outwardly from one or both sides of the aisle 10 into the lattice framework 2 alongside a row of storage bays 3 in the framework 2.

The rail network 7 includes rails 15 for the robotic load handler 8 extending along each row 11. Each rail 15 is slidably engageable with associated rail mounting brackets 16 on the framework 2 to mount the rails 15 on the framework 2 seated on spaced-apart support beams 6 of the framework 2. Essentially the rails 15 simply drop down onto the rail mounting brackets 16.

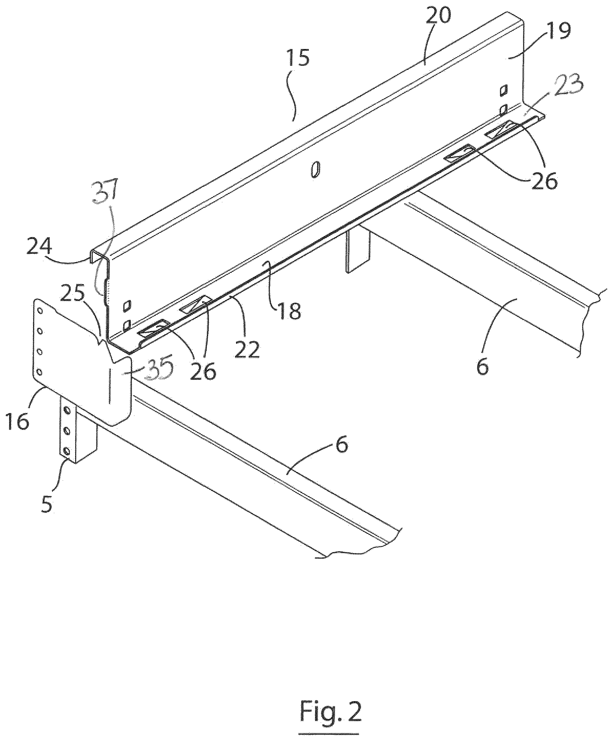

Referring in particular to Figs. 2 to 5, each rail 15 has a Z-profile having a bottom flange 18 forming a rail track for reception of wheels of the robotic load handler 8. An intermediate web 19 extends upwardly from an outer side of the bottom flange 18 and a top flange 20 projects outwardly at a top of the web 19 on an opposite side of the web 19 to the bottom flange 18. An inner edge of the bottom flange 18 has an upturned lip 22 so that the bottom flange 18, web 19 and lip 22 effectively form a channel 23 for reception of wheels 72 of the robotic load handler 8.

An outer edge of the top flange 20 has a downturned edge 24 which cooperates with a complementary groove 25 at a top of the mounting bracket 16 to mount the rail 15 on the mounting bracket 16 with the bottom flange 18 resting on the support beams 6.

It will be noted that pairs of locking tabs 26 are punched downwardly out of the bottom flange 18 for engagement with opposite sides of the support beams 6 to prevent any longitudinal movement of each rail 15 during use.

The rail mounting bracket 16 comprises a vertical plate 17 mounted on the support frame 2. The plate 17 has an inner end 21 with through holes 27 for attachment of the plate 17 by bolts 28 to a stanchion 5 of the support frame 2 for example.

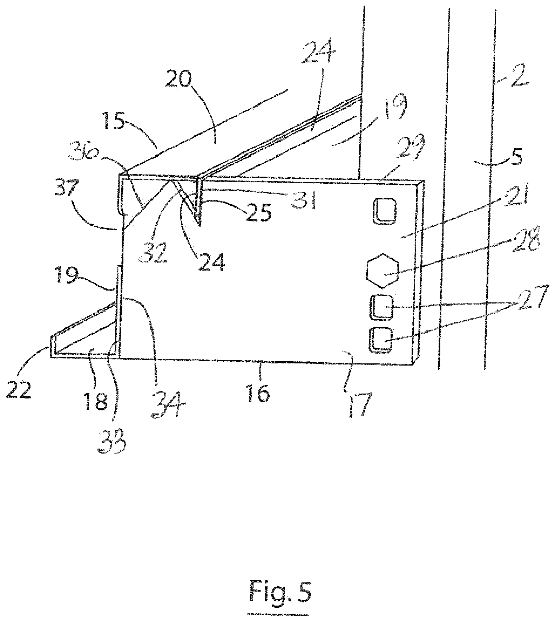

The upwardly open groove 25 at a top edge 29 of the plate 17 is V-shaped, having a vertical inner edge 31 and a forwardly angled outer edge 32, and is located adjacent but spaced inwardly from the outer-free end 33 of the plate 17. As best seen in Fig. 5 the downturned edge 24 at the outer edge of the top flange 20 of the rail 15 engages within the groove 25 seating against the vertical inner edge 31 of the groove 25 to hang the rail 15 on the rail mounting bracket 16.

An outer face 34 of the intermediate web 19 abuts against the vertical outer free end 33 of the plate 17 when the rail 15 hangs on the rail mounting bracket 16. It will be noted that an in turned flap 35 at the outer free end 33, which is perpendicular to the plate 17, abuts against the outer face 34 of the intermediate web 19. The plate 17 has a bevelled edge 36 extending between the top edge 29 of the plate 17 at the groove 25 and the outer free end 33 of the plate 17. Thus the rail 15 snuggly and acutely locates on the rail mounting bracket 16.

Referring in particular to Fig. 5, it will be noted that each rail 15 is provided with a tapered lead-in ramp 37 engaged by guide wheels 73 on the robotic load handler 8 to guide the robotic load handler 8 as it moves from the aisle 10 onto the row 11.

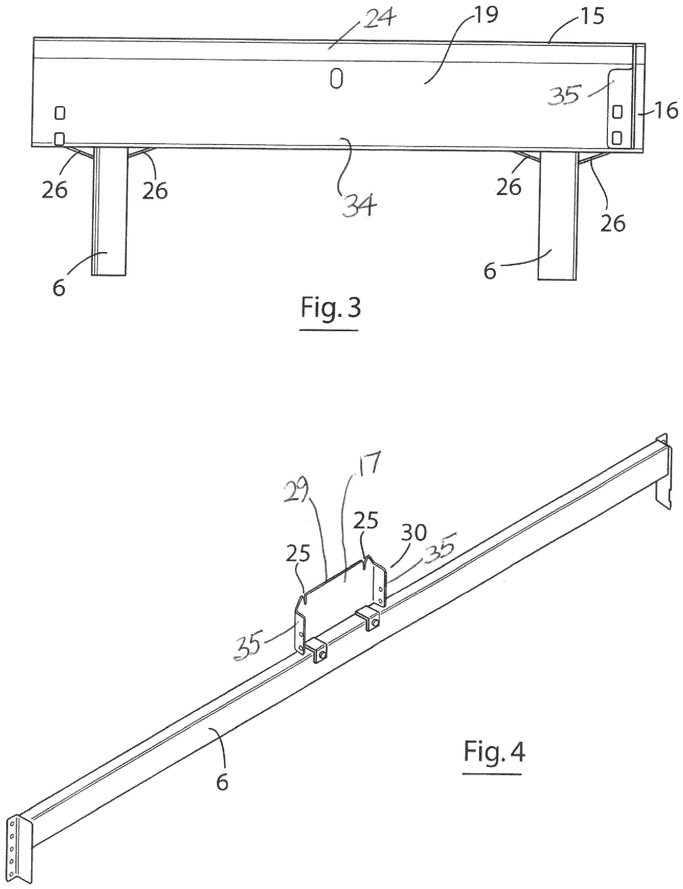

Fig. 4 shows an intermediate rail mounting bracket 30 for mounting on a cross beam 6 and having the slots 25 for reception of the edge 24 of the top flange 20 of the rail 15. The bracket 30 essentially comprises two interconnected plates 17, for mounting rails 15 in two adjacent rows 11.

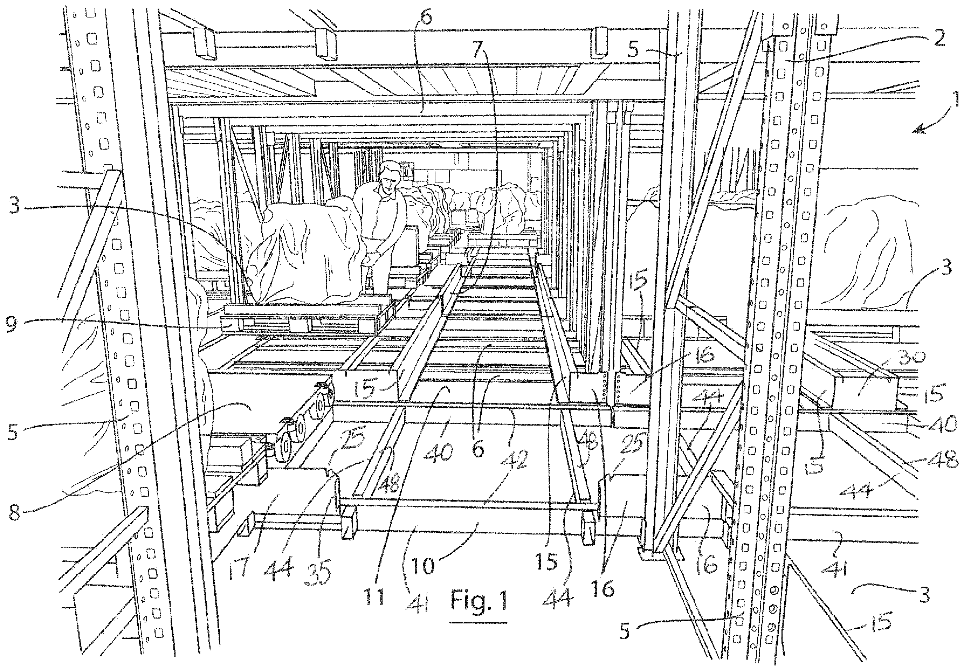

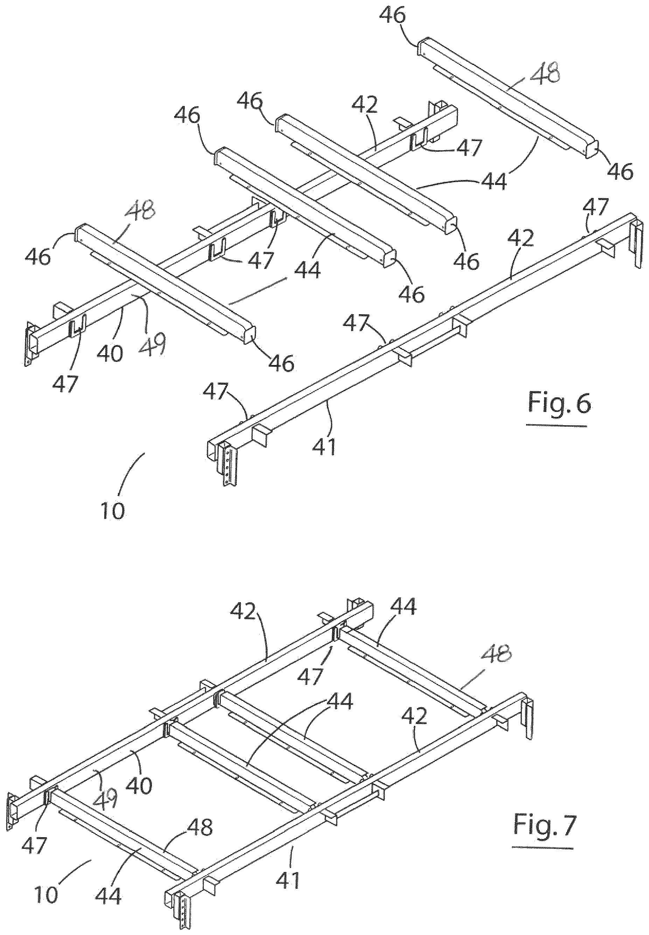

Referring in particular to Fig. 1 and Figs. 6 to 11, a pair of spaced-apart longitudinal beams 40, 41 define the aisle 10 and have upper faces 42 forming a track for the robotic load handler 8. Pairs of cross beams 44 are mounted between the longitudinal beams 40, 41 and are perpendicular to the longitudinal beams 40, 41. The pairs of cross beams 44 align with associated pairs of rails 15 extending along each row 11 in front of the storage bays 3.

Each cross beam 44 has a mounting flange 46 at each end which slidably engages within an upwardly open receiver socket 47 on an inside face of each longitudinal beam 40, 41 for mounting the cross beam 44 between the longitudinal beams 40, 41 with a top face 48 of each cross beam 44 lying in the same plane as the upper faces 42 of the longitudinal beams 40, 41.

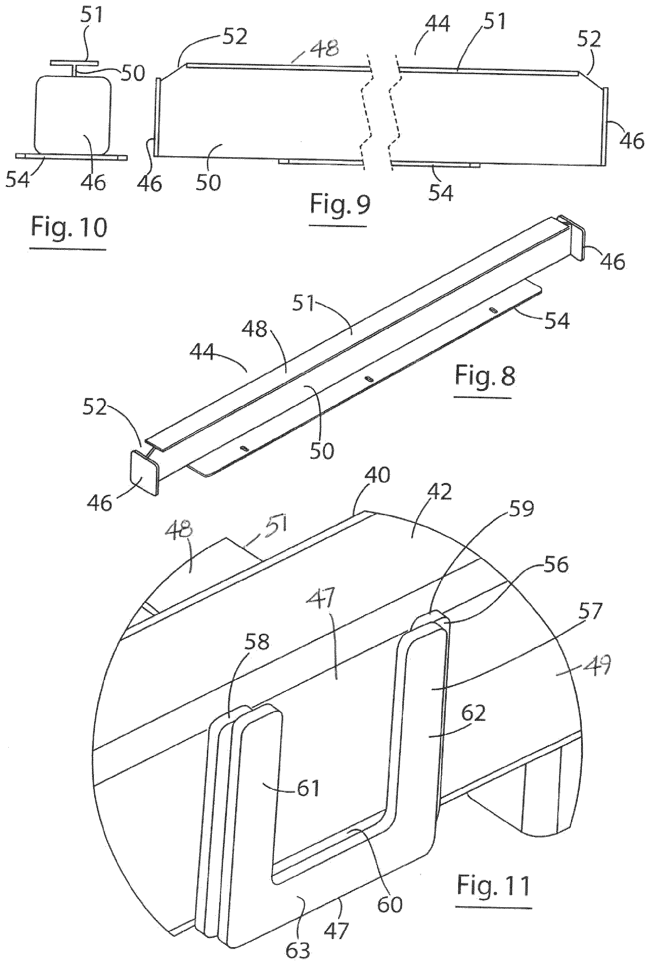

Referring in particular to Figs. 8 to 10, each cross beam 44 comprises an upright plate 50 with a horizontal top flange 51 at a top of the upright plate 50 forming a track for wheels of the robotic load handler 8. It will be noted that the upright plate 50 projects outwardly at each end of the top flange 51 and tapers outwardly and downwardly therefrom to leave a slot 52 between an outer end of each cross beam 44 and the longitudinal beam 40, 41 with which it is engaged at a top of the cross beam 44.

The mounting flange 46 provided at each end of the cross beam 44 is perpendicular to the upright plate 50 and perpendicular to the top flange 51. A support shelf 54 may be mounted at a bottom of the upright plate 50 and projecting to either side of the upright plate 50 to form a support for a walkway or mesh mounted between the cross beams 44 for access and safety purposes.

The receiver socket 47 is shown in more detail in Fig. 11 and is formed by two overlapping U-shaped plates, namely an outer plate 56 and an inner plate 57. The outer plate 56 is mounted on an inside face 49 of the longitudinal beam 40, 41 and comprises a pair of spaced-apart upright side arms 58, 59 interconnected at their lower ends by a cross member 60. The inner plate 57 is mounted on an inner face of the outer plate 56 and has upright arms 61, 62 which overlap and project inwardly of the side arms 58, 59 of the outer plate 56 and a cross member 63 interconnecting lower ends of the side arms 61, 62 and overlapping and projecting upwardly of the cross member 60 of the outer plate 56 to define therewith the socket 47 for reception of the mounting flange 46 of the cross beam 44. It will be appreciated that this arrangement is such that the cross beams 44 can be readily, easily and quickly assembled on the longitudinal members 40, 41 forming the aisle 10 by simply dropping the mounting flanges 46 into the sockets 64.

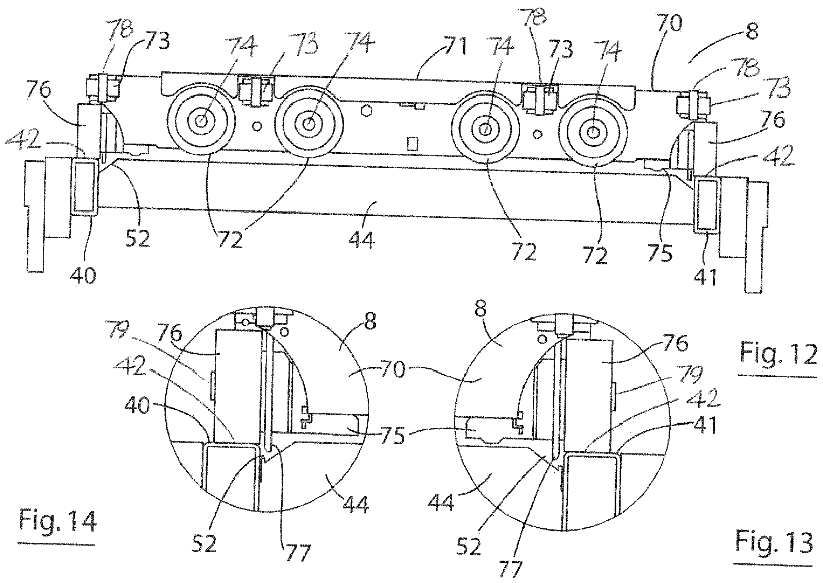

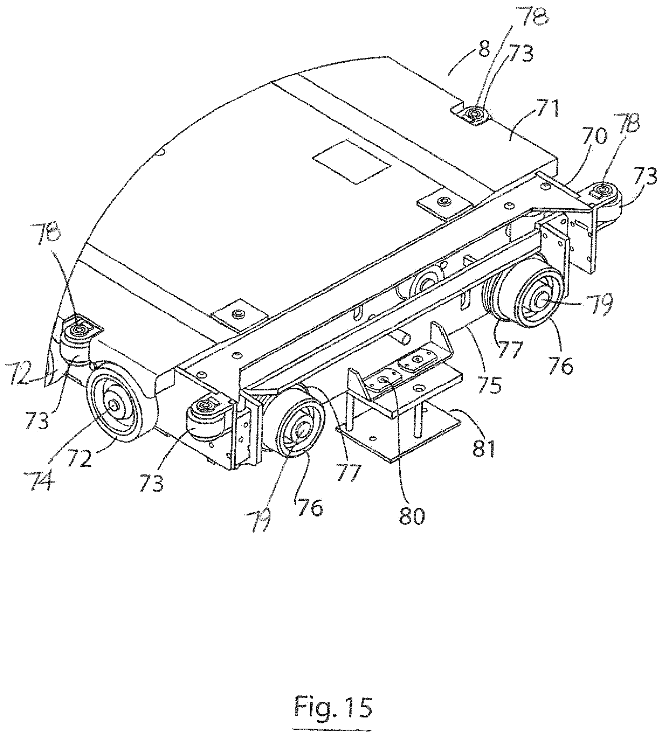

Referring now to Figs. 12 to 15, the robotic load handler 8 is shown in more detail. The robotic load handler 8 has a chassis 70 with a load carrying platform 71 seated on top of the chassis 70. A first set of wheels 72 with horizontal rotational axes 74 is provided on opposite sides of the chassis 70 for engagement with bottom flanges 18 of the rails 15 previously described. Guide wheels 73 with vertical rotational axes 78 project laterally outwardly at opposite sides of the chassis 70 to engage the web 19 of the rails 15 to guide the robotic load handler 8 along the rails 15.

A sub-frame 75 is mounted on an underside of the chassis 70 and carries sets of wheels 76 with horizontal rotational axes 79, perpendicular to the wheels 72 for supporting the robotic load handler 8 when it moves along the aisle 10 as shown in Fig. 12. It will be noted that the wheels 76 engage and run along the top faces 42 of the longitudinal beams 40, 41. Guide flanges 77 at an inner end of each wheel 76 engage within the groove 52 and against an inside face 49 of each longitudinal beam 40, 41 to retain the robotic load handler 8 aligned as it travels along the aisle 10.

The sub-frame 75 is mounted by rams (not shown) on the chassis 70 so that it can be raised and lowered on the chassis 70 for movement between a raised inoperative position in which the wheels 72 engage the rails 15 and a lowered operative position in which the wheels 76 are engagable with the longitudinal beams 40, 41, of the aisle 10 for movement of the robotic load handler 8 along the rows 11 and aisle 10 of the rail network 7.

The robotic load handler 8 is battery powered and will return to a charging station within the framework 2 when not in use. A charging connector 80 is downwardly facing and may be provided on an underside of the robotic load handler 8 on the sub-frame 75 for engagement with a complementary upwardly facing charging connector 81 at the charging station. Thus, the robotic load handler 8 is delivered to the charging station and then the sub-frame 75 is lowered to engage the charging connector 80 on the robotic load handler 8 with the complementary charging connector 81 at the charging station. Thus, a positive connection is made between the robotic load handler 8 and the charger to ensure a positive secure connection and rapid battery recharge without difficulty.

It will be appreciated that advantageously in accordance with the present invention the arrangement of the rails 15 and the cross beams 44 is such that the rail network 7 can be readily easily and quickly constructed on the framework 2 without having to bolt the individual parts together which is an extremely tedious and time-consuming task particularly on the relatively large frameworks 2 which are commonly used in automated storage and retrieval systems. This significantly reduces construction time and associated labour costs.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. An automated storage and retrieval system (1) of the type including a three-dimensional lattice framework (2) defining a plurality of storage bays (3), the framework (2) comprising a plurality of frame members secured together to form vertical stanchions (5) interconnected by horizontal beams (6), a rail network (7) extending through the framework (2), a robotic load handler (8) which is movable through the rail network (7) to deliver a load pallet (9) to each storage bay (3) and retrieve said load pallet (9) from the storage bay (3), the rail network (7) extending along an aisle (10) extending from a front to a rear of the framework (2) with a plurality of spaced-apart rows (11) extending outwardly from at least one side of the aisle (10) into the lattice framework (2) alongside a row of storage bays (3) in the framework (2), **characterised in that** the rail network (7) includes rails (15) for the robotic load handler (8) extending along each row (11), said rails (15) slidably engagable with associated mounting brackets (16) on the framework (2) to mount the rails (15) on the framework (2) seating on spaced-apart support beams (6) of the framework (2).

2. The system (1) as claimed in claim 1, wherein each rail mounting bracket (16) comprises a vertical plate mounted on the support frame (2), the plate having an upwardly open groove (25) at a top edge of the plate engaged by the rail (15) for hanging the rail (15) on the plate.

3. The system (1) as claimed in claim 1 or claim 2, wherein stop means (26) is provided to prevent longitudinal movement of each rail (15) mounted on the framework (2).

4. The system (1) as claimed in claim 3 wherein the stop means comprises locking tabs (26) projecting downwardly from each rail (15) for engagement with the support beams (6).

5. The system (1) as claimed in claim 4 wherein at least one pair of locking tabs (26) is provided on each rail (15) for engagement with opposite sides of one or more support beams (6).

6. The system (1) as claimed in claim 4 or claim 5 wherein each locking tab (26) is pressed out of the rail (15).

7. The system (1) as claimed in any preceding claim, wherein each rail (15) has a channel (23) for reception of wheels (72) of the robotic load handler (8).

8. The system (1) as claimed in any preceding claim, wherein each rail (15) has a Z-profile, having a bottom flange (18) forming a rail track, an intermediate web (19) extending upwardly from a side of the bottom flange (18) and a top flange (20) projecting outwardly at a top of the web (19) on an opposite side of the web (19) to the bottom flange (18).

9. The system (1) as claimed in claim 8, wherein a downturned edge at an outer edge of the top flange (20) engages within the groove (25) of the vertical plate of the rail mounting bracket (16) to hang the rail (15) on the rail mounting bracket (16), with an outer face of the intermediate web (19) abutting a free vertical edge of the plate.

10. The system (1) as claimed in claim 9, wherein the plate has a bevelled edge extending between the top edge of the plate at the groove and the outer free edge of the plate.

11. The system (1) as claimed in any preceding claim, wherein a pair of spaced-apart longitudinal beams (40, 41) defining the aisle (10) have upper faces (42) forming a track for the robotic load handler (8), pairs of cross beams (44) being mounted between the longitudinal beams (40, 41), perpendicular thereto, and aligned with associated pairs of rails (15) in each row (11).

12. The system (1) as claimed in claim 11, wherein each cross beam (44) has a mounting flange (46) at each end which slidably engages within an upwardly open receiver socket (64) on an inside face (49) of each longitudinal beam (40, 41) for mounting the cross beam (44) between the longitudinal beams (40, 41) with a top face (48) of the cross beam (44) lying in the same plane as the upper faces (42) of the longitudinal beams (40, 41).

13. The system (1) as claimed in claim 12, wherein each cross beam (44) comprises an upright plate (50) with a horizontal top flange (51) at a top of the upright plate (50) forming a track for wheels (76) of the robotic load handler (8), the upright plate (50) projecting outwardly at each end of the top flange (51) and tapering outwardly and downwardly therefrom to leave a slot (52) between an outer end of each cross beam (44) and the longitudinal beam (40, 41) with which it is engaged at a top of the cross beam (44).

14. The system (1) as claimed in claim 12 or claim 13, wherein the mounting flange (46) at each end of the cross beam (44) is perpendicular to the upright plate (50) and perpendicular to the top flange (51), and the receiver socket (64) is formed by two overlapping U-shaped plates (56, 57), namely an outer plate (56) and an inner plate (57), the outer plate (56) mounted on the inside face (49) of the longitudinal beam (40, 41) and comprising a pair of spaced-apart upright side arms (58, 59) interconnected at their lower ends by a cross member (60), the inner plate (57) mounted on an inner face of the outer plate (56) and having upright arms (61, 62) which overlap and project inwardly of the side arms (58, 59) of the outer plate (56) and a cross member (63) interconnecting lower ends of the upright arms (61, 62) and overlapping and projecting upwardly of the cross member (60) of the outer plate (56) to define therewith a socket (64) for reception of the mounting flange (46) of the cross beam (44).

15. The system (1) as claimed in any preceding claim, wherein the robotic load handler (8) is battery operated and has a charging connector (80) on an underside of the robotic load handler (8) for engagement with a complementary charging connector (81) at a charging station located between rails within the framework (2).
